# EUROPEAN PATENT SPECIFICATION

(11) **EP 2 543 636 B1**
(45) Date of publication and mention of the grant of the patent: **06.08.2025**
(21) Application number: 11750758.2
(22) Date of filing: 03.03.2011
(51) Int. Cl.: C01B 37/02, C01B 33/16, C04B 38/00, C04B 111/00

(54) **PROCESS FOR PRODUCING POROUS SILICA,**
HERSTELLUNGSVERFAHREN FÜR PORÖSES SILICIUM
PROCÉDÉ DE PRODUCTION DE SILICE POREUSE

(30) Priority: 04.03.2010 JP 2010048371
(43) Date of publication of application: 09.01.2013
(73) Proprietor: Tokyo Metropolitan Industrial Technology Research Institute, Tokyo 135-0064 (JP)
(72) Inventor: IMAI, Hiroaki, Yokohama-shi Kanagawa 223-8522 (JP); OAKI, Yuya, Yokohama-shi Kanagawa 223-8522 (JP); WATANABE, Hiroto, Tokyo 115-8586 (JP)
(74) Representative: Cabinet Netter
(86) International application number: PCT/JP2011/054928
(87) International publication number: WO 2011/108649

(56) References cited:
- JP-A- 2003 335 515
- JP-A- 2009 013 142
- JP-A- 2009 269 767
- US-A1- 2009 220 774
- DATABASE WPI Week 200432, Derwent World Patents Index; AN 2004-342488, XP002748890
- DATABASE WPI Week 200807, Derwent World Patents Index; AN 2008-B04878, XP002748917
- DATABASE WPI Week 200913, Derwent World Patents Index; AN 2009-E08449, XP002748918

## Description

### TECHNICAL FIELD

The present invention relates to a technique effectively applied to a method of producing a porous silica.

### BACKGROUND ART

A mesoporous silica is a porous body with hexagonal close-packed, cylinder-shaped, uniform pores of which an average size is 2 to 10 nm. This material is synthesized by using a rod-like micelle of a surfactant as a template, which is formed in water by dissolving and hydrolyzing a silica source such as alkoxysilane, sodium silicate solution, kanemite, silica fine particle in water or alcohol in the presence of acid or basic catalyst. Many kinds of surfactants such as cationic, anionic, and nonionic surfactants have been examined as the surfactant and it has been known that generally, an alkyl trimethylammonium salt of cationic surfactant leads to a mesoporous silica having the greatest specific surface area and a pore volume.

When a mesoporous silica was firstly discovered, there were problems on producing process because a high-temperature and high-pressure reaction was necessary in an acidic or alkaline aqueous solution with an autoclave and this reaction lasted 12 to 170 hours. Recently, as described in Patent literature 1, a synthesis method carried out at room temperature and normal pressure was developed. However, it was necessary to use water or ethanol as a solvent, which is several tens times larger in mole ratio than the raw material alkoxysilane. The solvent requires a larger synthesis system and leads to big problems on cost of raw materials and facility and the manufacturing efficiency. Though a powdery mesoporous silica is synthesized by performing the solvent system, the mesoporous silica has to be molded into a specific shape to apply various applications. Patent literature 2 discloses a method for obtaining a concentrated precursor solution suitable for avoiding these problems and applying/immersing on various substrates by reducing amount of water added as a solvent. However, as described in Patent literature 2, a cationic surfactant cannot be used under the reaction condition.

A mesoporous silica has been expected to be applied as an adsorbent for removing harmful volatile organic materials. In the case of application of exhaust gas disposal which is a typical application, since it has to adsorb a target component from flowing gas, a strong adsorbability is required. For this purpose, an adsorbent is preferable to have a pore of which diameter has 1 to 1.5 times or less the molecular diameter. Since a molecular diameter of many volatile organic materials is 1 nm or less, it is preferable that an adsorbent has pores of which diameter is about 0.5 to 1 nm. It is necessary to use a cationic surfactant having 7 or less carbon atoms to synthesize a mesoporous silica with pores of which diameter is within the above range.

However, Patent literatures 1 to 3 and Non-patent literatures 1 and 2 describe that the kind of cationic surfactant applicable to the synthesis of mesoporous silica is limited to surfactants of which a carbon atom of a hydrophobic moiety is 8 or more. Particularly, Non-patent literatures 1 and 2 report that when a cationic surfactant having 6 carbon atoms is used, an amorphous silica or a zeolite-type product is obtained while a mesoporous silica is not obtained. It has been believed that the micelles-forming ability in water decreases with reduction of the carbon chain of the hydrophobic moiety, and micelles sufficient as a template cannot be formed.

In order to avoid this problem, in Non-patent literature 3, the synthesis is performed using a fluorine-containing nonionic surfactant at -20°C. However, such a special surfactant and facilities for low-temperature reactions are generally expensive. Additionally, there was a concern that a fluorine-containing harmful material is released by removing the surfactant by calcination. In such a case, the facility to remove the harmful materials is also necessary. Meanwhile, Non-patent literature 4 discloses that Gemini surfactant having a high micelle-forming ability is applied to avoid this problem. However, it is generally difficult to acquire a large amount of Gemini surfactants as a synthesis raw material and expensive. Therefore, there has been a need for a synthesis method using a widely used cationic surfactant.

As a method for introducing micropores into a mesoporous silica, Patent literature 4 and Non-patent literature 5 describe a method for producing a micropore in the silica pore wall by a nonionic surfactant. However, since a micropore volume depends on an ethylene glycol chain of the hydrophilic moiety of a nonionic surfactant, the micropore volume obtained by this method does not exceed 0.25 cm³/g.

There has been also a problem that the reduction of the pore size leads to decrease the diffusional efficiency of adsorbate into pores. Therefore, it is necessary for the most effective use of a mesoporous silica pores to nanoparticulate a mesoporous silica itself and decrease the length of the pore.

Furthermore, fine particles of a mesoporous silica synthesized by a conventional method are several hundreds of nanometers to several micrometers. Therefore, it is necessary for applications to various materials to be molded using a binder or the like. Characteristics of the mesoporous silica is its thermal stability and transparency. It is expected to apply to recyclable adsorbents, photocatalyst supports, chromic materials, and the like by taking advantage of these characteristics. However, there has been a problem that a binder used for molding results to remarkably deteriorate such characteristics. On the contrary, a method without the binder leads to a problem that the strength of the resultant mold is insufficient.

There has therefore been an attempt to synthesize an aggregated mesoporous silica of which length is several millimeters to several centimeters (monolithic body). It has been reported that a monolithic body is obtained by a method in which the solvent is slowly volatilized during or after the gelation of a mesoporous silica (Non-patent literature 6) or a method in which a silica monolith is transferred to a mesoporous silica after synthesis (Non-patent literature 7). However, the conventional methods nave problems that it takes long time to perform, that the procedure is complicated, that it is difficult to maintain transparency after calcination, and so on. Especially, it is not possible to obtain a monolithic mesoporous silica with high transparency by using a cationic surfactant.

From the above problems, the industrial application of mesoporous silica has been extremely limited.

### PRIOR ART LITERATURES

### PATENT LITERATURES

Patent literature 1: Japanese Patent Publication No. 2001-104744
Patent literature 2: Japanese Patent Publication No. 2007-182341
Patent literature 3: Japanese Patent Publication No. 2009-30200
Patent literature 4: Japanese Patent Publication No. 2008-195587

### NON-PATENT LITERATURES

Non-patent literature 1: J.S.Beck, J.C.Vartuli, G.J.Kennedy, C.T.Kresge, W.J.Roth, and S. E. Schramm, Chem. Mater. 1994, 6, 1816.
Non-patent literature 2: T. Sawada, T. Yano, N. Isshiki, T. Isshiki, M. Iwamoto, Bull. Chem. Soc. Jpn., 2008, 81, 407.
Non-patent literature 3: Yan Di, Xiangju Meng, Lifeng Wang, Shougui Li, and Feng-Shou Xiao, Langmuir, 2006, 22, 3068.
Non-patent literature 4: Renliang Wang, Shuhua Han, Wanguo Hou, Lixin Sun, Jun Zhao, and Youshao Wang, J. Phys. Chem. C, 2007, 111, 10955.
Non-patent literature 5: K. Kosuge, S. Kubo, N. Kikukawa, M. Takemori, Langmuir, 2007, 23, 3095.
Non-patent literature 6: Haifeng Yang, Qihui Shi, Bozhi Tian, Songhai Xie, Fuqiang Zhang, Yan Yan, Bo Tu, and Dongyuan Zhao, Chem. Mater. 2003, 15, 536.
Non-patent literature 7: Jerome Babin, Julien Iapichella, Benoit Lefevre, Christine Biolley, Jean-Pierre Bellat, Francois Fajulaa, and Anne Galarneau, New J. Chem., 2007, 31, 1907.

Further, following documents are disclosed in the state of the art:
DATABASEWPIWeek200432 Thomson Scientific, London, GB;AN 2004-342488XP002748890,-&JP 2004 035368 A (DOKURITSU GUSEI HOIINSANGYO GIJUTSU SO) 5 February 2004 (2004-02-05), which disclose a mesoporous silicate and its manufacturing method;
DATABASE WPIWeek 200807 Thomson Scientific, London, GB;AN 2008-B04878-& JP 2007 197289 A (TOYOTA CHUO KENKYIJSHO KK) 9 August 2007 (2007-08-09), which disclose a spherical silica-based mesoporous body, a method for producing the same and a base catalyst using the same;
US 2009/220774 Al (IMAI HIROAKI [JP] ET AL) 3 September 2009 (2009-09-03), which discloses an antireflection coating comprising a mesoporous silica coating composed of mesoporous silica nanoparticles formed on a substrate or a dense coating formed on the substrate, the mesoporous silica coating having a refractive index of more than 1.10 and 1.35 or less; and
DATABASE WPIWeek 200913 Thomson Scientific, London, GB;AN 2009-E708449-& JP 2009 013142 A (UNIV KYOTO) 22 January 2009 (2009-01-22), which disclose a mesoporous silica for sustained release.

### DISCLOSURE OF THE INVENTION

### PROBLEMS TO BE SOLVED BY THE INVENTION

An object of the prevent invention is to provide a method to produce porous silica capable to be easily molded to various forms, have excellent transparency, be nanoparticulated, and be obtained with high efficiency even when a cationic surfactant having 7 or less carbon atoms is used.

### MEANS FOR SOLVING THE PROBLEMS

The present invention is a method for producing a porous silica obtained by hydrolyzing an alkoxysilane, wherein the alkoxysilane is hydrolyzed in the presence of a surfactant under the condition that the stoichiometric ratio of the alkoxysilane : the water = 1:n and the pH is 0 to 2, according to the claims.

That is, a stable silicate ion is produced without a solvent by dispersing a cationic surfactant in the alkoxysilane, then, adding 2 to 4 equivalents ("eq") of water to the alkoxysilane, slowly proceeding the hydrolysis of alkoxysilane by adjusting pH. A precursor solution of mesoporous silica is produced by quickly dissolving the surfactant in the produced silicate ions to form a homogeneous solution.

The precursor solution of mesoporous silica comprises a silicate ion, a surfactant, 4 eq of alcohol molecule eliminated from the alkoxysilane, and a small amount of acidic component for pH adjustment.

In this stage, the eliminated alcohol by natural evaporation or reduced pressure using a rotary evaporator and excess water resulting from dehydration condensation may be removed.

When the mesoporous silica precursor is stirred or placed at a given temperature, the whole system is gelated. A mesoporous silica with pores is obtained by drying the gel, and then, removing the surfactant by washing or calcination.

An appropriate amount of water added is 2 to 4 eq. Accordingly, stable micelles can be produced in the silicate ion, and a precursor capable to be easily molded to various forms is obtained.

An appropriate pH after adding water is 0 to 2. When pH is 2 or more, since the alkoxysilane is instantly hydrolyzed and gelated, the desired pores cannot be obtained. Since the rate of hydrolysis/gelation of the alkoxysilane is the lowest at pH 2, a precursor can be homogenously formed. At pH 0 to 1, the hydrolysis rate accelerates, and the gelation rate is sufficient for forming of micelles of the surfactant and molding a mesoporous silica. Therefore, a mesoporous silica with the desired pores and form can be obtained.

The order for adding an alkoxysilane, water, and a surfactant is optional.

In case that it is necessary to accelerate the gelation rate to quickly obtain a mesoporous silica, the reaction temperature may be increased, or the precursor may be exposed into a basic aqueous solution or steam.

The surfactant is a cationic surfactant, preferably having a hydrophobic group with 2 to 7 carbon atoms or a hydrophobic group such as a benzyl group or a phenyl group. According to the chain length of the hydrophobic group, the average pore size varies within the range of 0.5 nm or more and less than 2 nm, preferably 0.5 to 1.4 nm, and more preferably 0.5 to less than 1 nm. The specific surface area varies within the range of 300 to 1800 m²/g, preferably 450 to 1200 m²/g. The micropore volume varies within the range of 0.1 to 2.0 cm³/g, preferably 0.1 to 0.5 cm³/g.

The average pore size may be measured by, for example, the BJH analysis, the GCMS method or the like, and the specific surface area may be measured by, for example, the BET method.

Moreover the surfactant may be a cationic surfactant of which a hydrophobic group has 8 to 24 carbon atoms. In that case, the average pore size may be varied optionally within the range of 1.4 to 4 nm.

When the precursor is added an aqueous solution polymer such as polyethylene glycol (PEG), the produced mesoporous silica is nanoparticulated. That is, it is possible to control the structure of the produced mesoporous silica by both the molecular weight and amount of the added aqueous solution polymer. The produced silica is obtained as a white monolithic body (porous body) constituted by nanoparticles which are 10 to 20 nm and bounded together.

The precursor of the mesoporous silica can be formed into various forms at gelation, such as a monolithic form by the property to maintain the shape of a container, a bead by dropping a liquid, a thin film by spin coating, dip coating or the like, a fiber by blowing out with a spinner or the like.

The present invention can more finely control the pore size by coexisting an organic silane in the reaction system.

An organic silane compound with a short carbon chain such as triethoxyvinylsilane is used as a silica source together with the alkoxysilane.

The reduction effect of the pore size by adding the organic silane is considered because the organic silane with a short carbon chain reduces a diameter of a micelle of a template.

Though an organic functional group of the organic silane may be present on the pore wall or outside the particle, it is possible to be removed by heat treatment or the like.

If the organic functional group needs to be applied to modification of a surface of the silica itself or of the other organic compound, a porous silica which is washed and removed a surfactant and has the organic functional group may be generated.

### EFFECTS OF THE INVENTION

According to an embodiment, since the alkoxysilane is hydrolyzed under the condition that the stoichiometric ratio of the alkoxysilane : the water = 1:2 to 4 and pH is 0 to 2, a porous silica capable to be easily molded into various shapes, have excellent transparency, and be nanoparticulated can be obtained at a high efficiency even when a cationic surfactant having 7 or less carbon atoms is used.

### BRIEF DESCRIPTIONS OF THE DRAWINGS

Fig. 1 is a photograph of a monolithic mesoporous silica;
Fig. 2 is a graph of nitrogen adsorption-desorption isotherms of the mesoporous silica;
Fig. 3 is a graph showing a result of the GCMC analysis of the mesoporous silica;
Fig. 4 is a photograph of mesoporous silica nanoparticles;
Fig. 5 is a graph of a nitrogen adsorption-desorption isotherms of ethylene mesoporous silica nanoparticles using PEG;
Fig. 6 is a TEM image of mesoporous silica nanoparticles using PEG;
Fig. 7 is a photograph of bead-formed mesoporous silica using PEG;
Fig. 8 is a photograph of the thin film-formed mesoporous silica;
Fig. 9 is a graph showing the amount of dynamic toluene adsorption per gram in each sample;
Fig. 10 is a graph of the nitrogen adsorption-desorption isotherms of porous silica obtained in the embodiment 2;
Fig. 11 is a table showing analysis results of porous silica obtained in the embodiment 2;
Fig. 12 is a graph showing the change of the average pore size to the carbon atom number;
Fig. 13 is a graph showing a result of small-angle X-ray diffraction of the porous silica obtained in the embodiment 2;
Fig. 14 is a table showing analysis results of porous silica obtained in the embodiment 3;
Fig. 15 is a graph showing a result of small-angle X-ray diffraction of the porous silica obtained in the embodiment 3;
Fig. 16 is a graph showing the variation of the average pore size of the porous silica;
Fig. 17 is a graph of the nitrogen adsorption-desorption isotherms of porous silica nanoparticles synthesized using C16TAC and C6TAB;
Fig. 18 is a graph of a pore size distribution of porous silica nanoparticles synthesized using C16TAC;
Fig. 19 is a graph of a pore size distribution of porous silica nanoparticles synthesized using C6TAB;
Fig. 20 is a graph showing the amount of dynamic toluene adsorption per gram in each sample.

### BEST MODE FOR CARRYING OUT THE INVENTION

### (Embodiment 1)

In the present invention, an alkoxysilane and a cationic surfactant are mixed without a solvent, and water is added as a reaction agent to adjust pH, thereby gelating the resulting precursor solution.

The pH of the water added is desired to be adjusted to 2 of an isoelectric point of alkoxysilane. Since the hydrolysis rate of the alkoxysilane and the gelation rate of silicate ions are the slowest at the isoelectric point, it is possible to get time sufficient for micelle formation of the surfactant. At pH 0 to 1, though the hydrolysis is accelerated, the similar effect can be obtained because of the sufficiently low gelation rate of silicate ions. Therefore, it is required that pH of the water added is adjusted within the range of 0 to 2. At pH 3 or higher, since the hydrolysis rate and the gelation rate are too high, and it cannot be secure sufficient time for dissolution of the surfactant and the micelle formation, mesoporous silica having the desired pore structure cannot be obtained.

An acid for pH adjustment includes inorganic acids such as hydrochloric acid, sulfuric acid and nitric acid, and organic acids such as acetic acid.

It is required to improve formability that no solvent is present. For this reason, the amount of added water to the alkoxysilane ranges from 2 eq which is the minimum required for the reaction, to 4 eq necessary to complete the hydrolysis of the alkoxysilane, and preferably, 4 eq. Using this condition, it is possible to prepare an almost pure mixture of the silicate ions and the surfactant, and to secure the formability and stability of the surfactant micelle in this system.

The cationic surfactant is a surfactant represented by the general formula R₁R₂R₃R₄N⁺X⁻, and preferably, a quaternary cationic surfactant, wherein R₁ is an alkyl group, a benzyl group, or a phenyl group of 1 to 24 carbon atoms, each of R2R3R4 is a methyl group, an ethyl group, a propyl group, or a butyl group, and, X is an halogen ion of F, Cl, Br, or I. The alkyl group of Ri may be linear or branched.

In the present description, even if a cationic surfactant with a short carbon chain is applied, a mesoporous silica can be efficiently synthesized. An example of a synthesis method using a common solvent such as water or ethanol is shown below. According to a typical conventional method, a cationic surfactant is dissolved in a hydrochloric acid solution, then an alkoxysilane is added, and after stirring, an ammonia solution is added so that a mesoporous silica is gelated. When cationic surfactant of which the carbon chain is up to 10 is used, the gelation is completed almost at the same time as adding ammonia, and thus a mesoporous silica is quantitatively obtained. Meanwhile, when a cationic surfactant of which the carbon chain is lower than 8 is used, the time to gelation after adding ammonia is greatly prolonged. When a cationic surfactant of which the carbon chain is 6 or lower or having a benzyl group, there are following problems: maximum gelation time is around two weeks; significant reduction of the yield; and that only an amorphous silica is obtained. The present invention solved the problems by focusing on the high micelle-forming ability in silicate ions and finding that the reaction is proceeded under solvent-free condition.

That is, since the reaction system only uses the necessary amount of water for the completion of hydrolysis, and not used as a solvent, water disappears from the reaction system after hydrolysis, and it is not necessary to concern about the decline of the micelles forming ability in water. Therefore, a mesoporous silica can be synthesized even if a short cationic surfactant of which carbon atoms is less than 8 is used. As a result, pores of which a diameter is 1 nm or less are formed, and thus, it is possible to provide a mesoporous silica with excellent adsorption performance for removing harmful volatile organic materials.

In addition, in the present description, a mesoporous silica can be nanoparticulated.

The present description provides one method for nanoparticulating a mesoporous silica by adding a water-soluble polymer to the reaction system.

As the water-soluble polymer, an inexpensive and widely used polymer such as polyethylene glycol (PEG) can be used. The average molecular weight of polyethylene glycol is not limited, but preferably several hundreds to several thousands.

A water-soluble polymer like polyethylene glycol is soluble in silicate ions and produces a homogeneous solution. With the progress of the reaction, a hydrogen bond is formed by a silanol group on the silica outer wall covering an aggregate of rod-like micelles of the cationic surfactant and oxygen atoms of polyethylene glycol. The completion of the gelation reaction leads to the phase separation between silica and polyethylene glycol, thereby mesoporous silica nanoparticles are produced. In this reaction, since polyethylene glycol does not affect the formation of micelles of the cationic surfactant, nanoparticles of mesoporous silica having the desired pore structure are produced.

The gelation of silicate ions is suppressed by the hydrogen bond formed between polyethylene glycol and silicate ions, and the time before gelation is extended up to about one month at room temperature.

The gelation rate can accelerate by increasing the reaction temperature, dropping a basic aqueous solution, or a method for alkalizing the whole system.

According to this method for adding a water-soluble polymer, it is possible to produce 10 to 20 nm particles of the mesoporous silica. By the present embodiment, the product can be obtained as an aggregate of which the resultant nanoparticle binds each other. Though the nanoparticles themselves form an aggregate, pores of the interparticle void are connected to one another to function as a new mesopore. The average diameter of the pore in the interparticle space is around 50 nm. The aggregate of nanoparticles is obtained as a white monolithic (porous) form and has sufficient strength against impact.

The formation of an aggregate of nanoparticles is confirmed, for example, by observing a photograph of the particles taken with a transmission electron microscope (TEM). It can be visually determined colorless and transparent thereof.

Since a stable precursor solution is obtained by using any cationic surfactant, it is possible to manufacture a mesoporous silica molding by the following molding method.

That is, by placing or stirring in a reaction container, it is possible to mold a monolithic mesoporous silica depending on the shape of the reaction container. It is possible to mold into any shape such as pellets, spherical, rod-like, or disk by selecting the shape of reaction container.

A spherical mesoporous silica bead can be produced by dropping the precursor solution into a heated liquid or a basic aqueous solution. In this case, any size of the bead can be molded by varying the diameter of a dropping nozzle, a dropping rate, and the viscosity depending on the degree of gelation of the precursor solution. A hollow bead can be produced by forming a bubble therein. As the basic aqueous solution, an aqueous ammonia solution, an aqueous sodium hydroxide solution, or the like can be easily used.

Thin film-formed mesoporous silica can be obtained by spincoating or dipcoating the precursor solution. The gelation can complete by directly drying it or exposing it to ammonia vapor after forming the thin film. Dipcoating is applicable for honeycombs, paper, cloth, and the like, while both spincoating and dipcoating are applicable for the surface of a substrate.

Fiber-form mesoporous silica can be produced by spraying the precursor solution from a nozzle such as a spinner. The fiber-form mesoporous silica can be produced by gelation in the air by by spraying the precursor solution from a spinner at a high temperature, or by spraying the precursor solution from a spinner into ammonia vapor.

From the above descriptions, the present invention can achieve the following effects.
(1) The mesoporous silica described in here can be applied as an efficient adsorbent for a wide variety of adsorbates because the pore size is easily controlled. Generally, it is desired an adsorbent having a pore size of about 1 to 1.5 times the diameter of adsorbate molecules for gas adsorption in a flow system. Since a molecular diameter of the targeted harmful adsorbate is often 1 nm or less, a micropore of which the diameter is 1.5 nm or less is desired to efficiently adsorb such the adsorbate. In conventional methods, a special synthesis method including the use of an expensive surfactant, synthesis at an ultralow temperature, and so on has been necessary to reduce the pore size of a mesoporous silica to the micropore level. The reduction of pore size is achieved by the mesoporous silica of the present invention by a widely used surfactant. Furthermore, since the nanoparticulation can be achieved at the same time, the adsorbate can be easily diffused, and it can be applied as an efficient adsorbent. Moreover, since the product can be molded to any form and it can be possible to greatly downsize producing and drying facilities because of its solvent-free condition, the cost for both the raw material and producing can be reduced. Since major factors in conventionally preventing the wide spread of mesoporous silicas were cost and lack of molding properties, the present invention can greatly contribute from the industrial point of view.
(2) When the mesoporous silica of the present embodiment is applied to a catalyst support, because of the high transparency and the unlikelihood of scattering, it is particularly highly effective as a photocatalyst support. This is due to the following effects: that it was obtained as a colorless, transparent monolithic form, not a conventional powder of several microns; and that , even during nanoparticulation, the particle size and the interparticle-space pore size were successfully reduced to 10 nm or less, 5 nm minimum which was first succeeded by the present embodiment. It has also high advantage because of easily molding to various forms such as a film and a fiber. As well as the adsorbent, the cost reduction for the raw material producing also greatly contributes to dissemination.
(3) Since the mesoporous silica is applied to widely ranges, by containing various molecules in pores, it has been considered the application to a functional material such as a fluorescent material and electronic material. It can be expected that the pore size that the molecule contained in the nano space can exhibit its specific property is 1 nm or less close to a diameter of the molecule. In these applications, the mesoporous silica of the present embodiment also exhibits effects such as the width of the controllable pore size; facility of molding; transparency; and excellent impact resistance.

### Examples

The present invention will be described further in detail through examples. However, the present invention is limited to the attached claims.

Obtained mesoporous silicas were evaluated using the following devices.

### [Observation by Transmission Electron Microscope]

The shape and particle size of samples were measured using FE-TEM (TECNAI F20: FEI). The sample was prepared by dispersing a pulverized sample in a copper mesh with a collodion film.

### [Nitrogen Adsorption]

Using a nitrogen adsorption apparatus (Tristar 3000, manufactured by Micromeritics), the pore structure, specific surface area, pore volume, and average pore size of the sample were examined. The sample was measured just after degassing by Vac Prep 061 (manufactured by Micromeritics) at 160 °C for 3 hours. Using a nitrogen adsorption apparatus (BELSORP-max, manufactured by BELL Japan), the micropore size distribution of the sample was analyzed by the GCMC method.

### [X-ray Diffraction]

Using D8 Advance (manufactured by Bruker AXS), the orderliness in microstructure of the sample was examined. The X-ray was entered at a low angle of 1.0 to 8.0° to the sample for analysis. The slit was 0.1-mm divergence, and a high-speed detector (Lynx Eye) was used for detection.

### (Example 1)

### [Synthesis of Monolithic Mesoporous Silica]

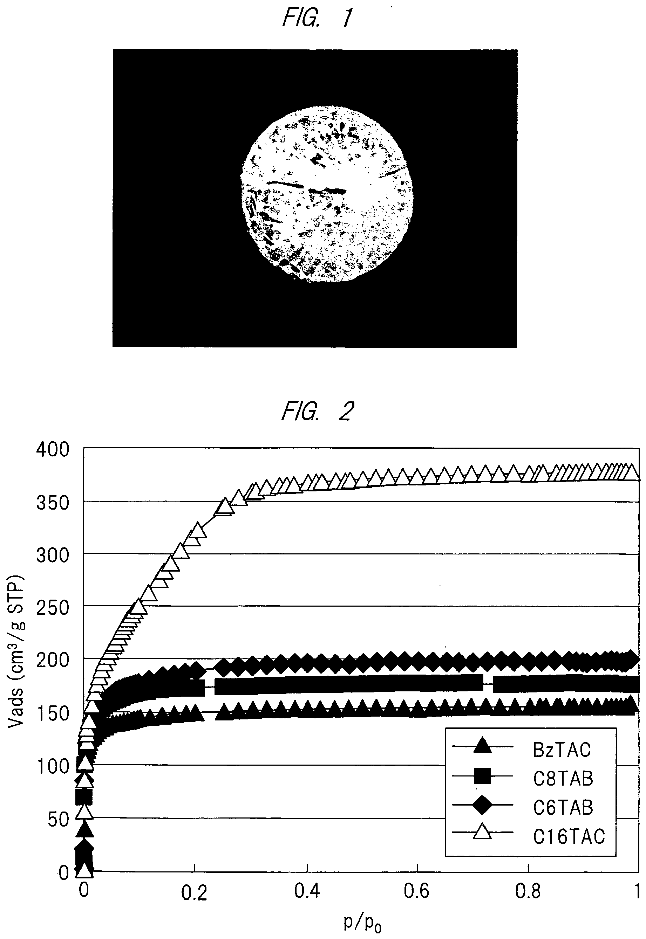

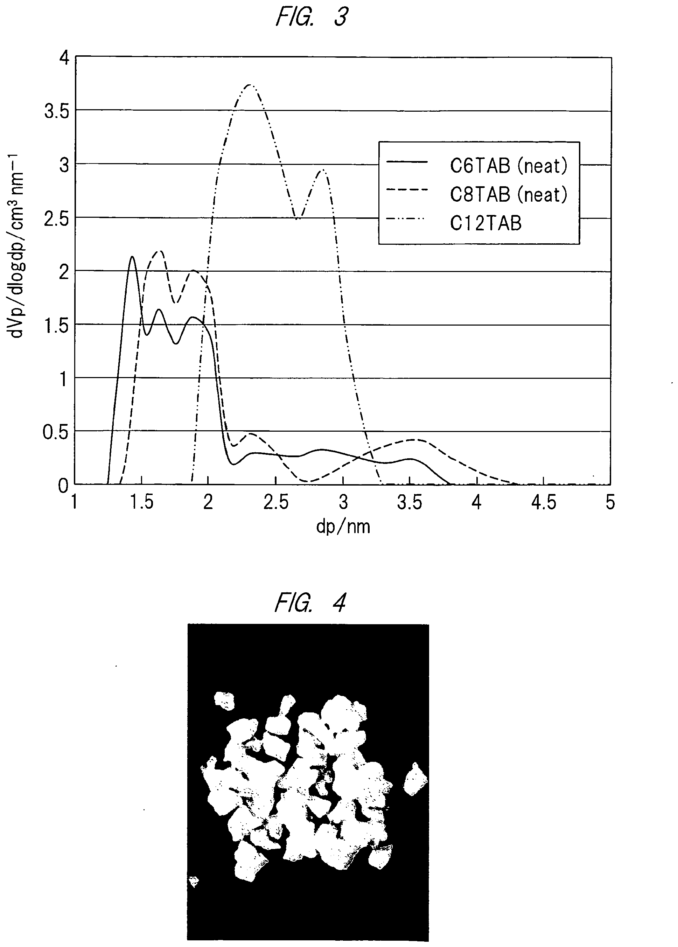

As a silica source, 8 g of tetraethoxysilane (TEOS) (0.038 mol; 1 eq) was added in a polypropylene container, and then, a surfactant, any one of hexadecyl trimethylammonium chloride (C16TAC), octyl trimethylammonium bromide (C8TAB), hexyl trimethylammonium bromide (C6TAB), or benzyl trimethylammonium chloride (BzTAC) was dispersed in an amount of 2.4 g (in the case of C16TAC, 0.0075 mol; 0.2 eq), and stirred. Then, 2.74 g of water of which pH is adjusted to 2 with hydrochloric acid (0.152 mol; 4 eq) was added and stirred at room temperature. The hydrolysis of TEOS had proceeded during one hour stirring, and the surfactant dissolved. This solution (precursor solution) was maintained at room temperature or 60 °C, and continuously stirred or placed. Gelation was completed after 12 hours to several days, and the whole solution was gelated with visually-colorless transparency. The gel was dried at 60 °C and calcined at 600 °C for 3 hours to remove the surfactant. As shown in Fig. 1, the obtained mesoporous silica was colorless, transparent, and monolithic (porous). The nitrogen adsorption-desorption isotherms of the obtained mesoporous silicas is shown in Fig. 2. The isotherm of C16TAC indicates type IV of the classification of IUPAC (International Union of Pure and Applied Chemistry) and the presence of mesopores. The isotherms of C8TAB, C6TAB, and BzTAC indicate type I of the IUPAC classification and the presence of micropores. Table 1 shows the number of carbon atoms of the surfactant and the specific surface area, pore volume, and average pore size of the obtained mesoporous silica. On C16TAC, the BET specific surface area was 1203 cm²/g, and the pore volume was 0.58 cm³/g. The result of the BJH pore analysis shows that the average pore size was 2.1 nm. On C8TAB, C6TAB, and BzTAC, the BET specific surface area was 552, 617, and 480 cm²/g, respectively, and the pore volume was 0.28, 0.32, and 0.25 cm³/g, respectively. When a surfactant with C8 or lower, the average pore size is less than 2 nm and, since it cannot be accurately calculated by the BJH analysis, analysis was performed using the GCMC method except BzTAC. Since the GCMC method tends to largely estimate the pore size, the GCMC analysis result of the mesoporous silica systhesized by a conventional method using dodecyl trimethylammonium bromide (C12TAB) is also shown in Fig. 3. The pore size of C12TAB is 2 nm by the BJH analysis. Assuming that the GCMC method excessively estimates the pore size by about 0.5 to 0.6 nm, the pore size of the mesoporous silica synthesized using C8TAB can be estimated around 1 to 1.2 nm, and the pore size using C6TAB which is lower can be estimated around 0.8 to 1 nm.

**[Table 1]**

| Surfactant | Number of Carbon atoms | BET Specific Surface Area | Pore Volume | Average Pore Diameter |
|---|---|---|---|---|
| | | m²/g | cm²/g | nm |
| C16TAC | 16 | 1203 | 0.58 | 2.1* |
| C8TAB | 8 | 552 | 0.27 | 1~1.2** |
| C6TAB | 6 | 617 | 0.32 | 0.8~1** |
| BzTAC | 7 | 480 | 0.25 | 2>* |

| | | | | |
|---|---|---|---|---|
| * BJH analysis ** GCMC method (after correction) | | | | |

### (Example 2)

### [Synthesis of Monolithic Mesoporous Silica Nanoparticles by Adding PEG]

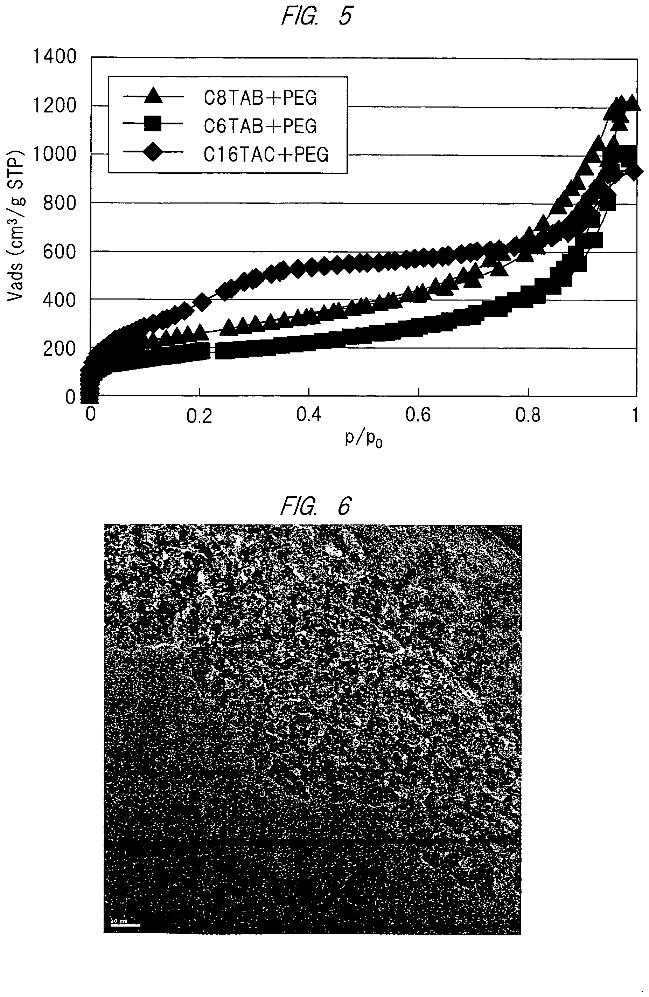

As a silica source, 8 g of TEOS (0.038 mol; 1 eq) was added in a polypropylene container, then, either of C16TAC, C8TAB, and C6TAB was dispersed in an amount of 2.4 g (0.0075 mol; 0.2 eq), and further added polyethylene glycol (average molecular weight 1000; 7.5 g) and stirred. Then, 2.74 g of water of which pH is adjusted to 2 with hydrochloric acid (0.152 mol; 4 eq) was added and stirred. The hydrolysis of TEOS had proceeded during 1 hour stirring, and the surfactant and the polyethylene glycol dissolved. This solution was maintained at room temperature or 60 °C, and then stirred or placed. Gelation was completed after 12 hours to several days, and the whole solution was gelated with visually-colorless transparency. The gel was dried at 60 °C and calcined at 600 °C for 3 hours to remove the surfactant and the polyethylene glycol. As shown in Fig. 4, the obtained mesoporous silica was white and monolithic. Fig. 5 shows the nitrogen adsorption-desorption isotherms of the obtained mesoporous silica. The isotherm of C16TAC indicates type IV, the isotherms of C8TAB and C6TAB indicate type I and the presence of mesoporoes and micropores. Furthermore, the absorption amount rapidly increased around at 0.8-0.9 of the relative pressure. It results from the capillary condensation to the second mesoporous generated in the interparticle space when a mesoporous silica constituting a monolith is generated to 10-20 nm of a nanoparticle. Table 2 shows the number of carbon atoms of the surfactant and the specific surface area, pore volume, and average pore size of the obtained mesoporous silica. On C16TAC, C8TAB, and C6TAB, the BET specific surface area was 1670, 954, and 630 cm²/g, respectively, and the pore volume was 1.70, 1.96, and 1.60 cm³/g, respectively. The result of the BJH pore analysis shows that each average diameter of the porous from an interparticle space of nanoparticles of all samples is around 40 nm. The size of the particle and the interparticle space can be also observed with an image of a transmission electron microscope (TEM) as shown in **Fig. 6****.**

**[Table 2]**

| Surfactant | BET Specific Surface Area | Pore Volume | Average Pore Diameter (Interparticle Space) |
|---|---|---|---|
| | m²/g | cm²/g | nm |
| C16TAC | 1670 | 1.7 | 40 |
| C8TAB | 954 | 1.96 | 40 |
| C6TAB | 630 | 1.6 | 40 |

### (Example 3)

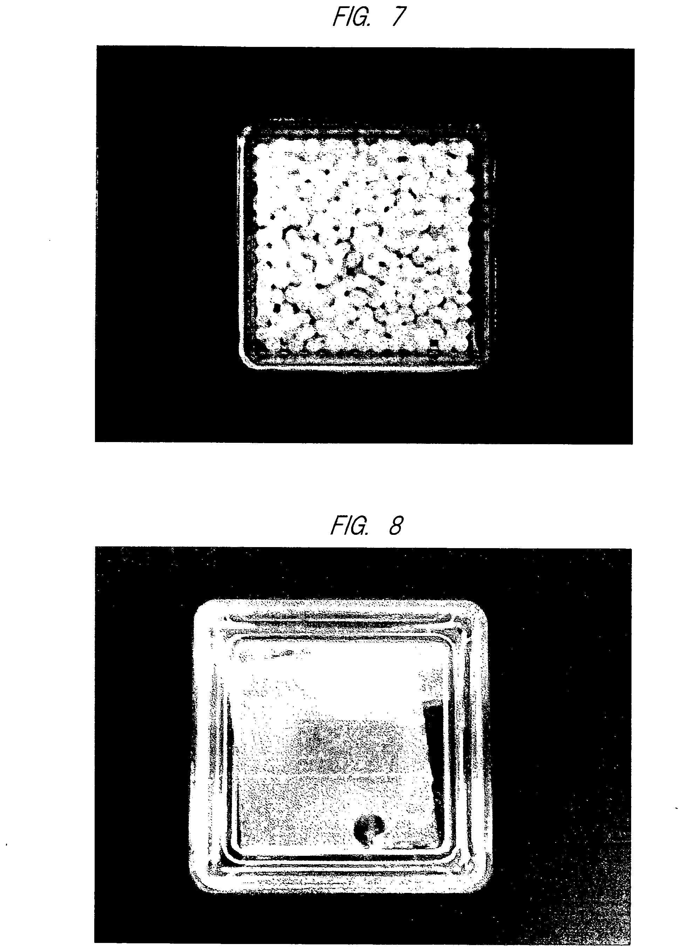

Each of the precursor solutions prior to gelation of Example 2 was dropped into 28% ammonia solution with a syringe. The dropped solution immediately gelated at the moment exposed to the ammonia solution while maintaining its spherical shape. The precipitated spherical gel was collected, dried, and calcined at 600 °C for three hours to remove the surfactant and the polyethylene glycol. Fig. 7 shows a photograph of the obtained bead-formed mesoporous silica. As seen in the photograph, when the precursor solution was added the polyethylene glycol, a white and spherical bead was obtained due to scattering. The obtained bead was around 2 to 3 mm of spherical shape.

### (Example 4)

Each of the precursor solutions prior to gelation of Examples 1 to 3 was spincoated onto a glass substrate using a spin coater. The coated glass substrates were exposed to ammonia vapor for several tens of seconds to complete gelation. After drying, it was calcined at 600 °C for 3 hours to remove the surfactant and polyethylene glycol. Among the obtained thin films, Fig. 8 shows a photograph of the precursor solution from Example 1 as an example.

### (Example 5)

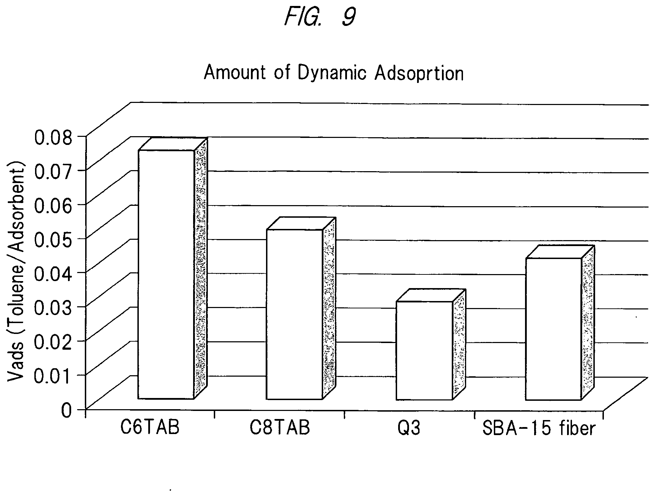

To evaluate the performance of the mesoporous silica obtained in Example 1 as an adsorbent, the dynamic toluene adsorption capacity was measured. This measurement was performed by a dynamic adsorption evaluation apparatus (manufactured by Okura Giken) under the conditions: 100 ppm of toluene concentration, 1 m/sec of air velocity, 10.6 L/min of air volume, 6.4 mL of sample amount, 15 mm of inner diameter of sample tube. The sample was pretreated under dry air flow at 200 °C for about 1 hour. Fig. 9 shows the amount of dynamic toluene adsorption per gram of each sample, and the amount of both dynamic adsorption of a commercially available silica gel Q3 and fiber-formed mesoporous silica (SBA-15 fiber) described in Non-patent literature 5. The mesoporous silica obtained by the present example using C6TAB as a template showed around twice the amount of dynamic toluene adsorption compared with the current mesoporous silica (SBA-15 fiber). It results from an achievement of the large micropore volume by micro porous of the mesoporous silica porous of the present example which could not be achieved by the conventional method.

### (Embodiment 2)

In Embodiment 2, as same as the Embodiment 1, an alkoxysilane and a cationic surfactant are directly mixed without a solvent, and water is added as a reaction agent to adjust pH to gelate the resulting precursor solution. Using rod-like micelles of the surfactant formed in water as a template, the alkoxysilane is hydrolyzed to form a cylindrical silica (SiO₂) with pores. This silica is referred to as "porous silica." In this embodiment, further determination was conducted by increasing the kind of examined cationic surfactants.

The present invention will be described in further detail through examples. However, the present invention is limited to the attached claims.

Obtained mesoporous silicas were evaluated using the following devices.

### [Observation by Transmission Electron Microscope]

The shape and particle size of the sample were measured by FE-TEM (TECNAI F20: FEI). Each sample was prepared by dispersing a pulverized sample in a copper mesh with a collodion film.

### [Nitrogen Adsorption]

Using a nitrogen adsorption apparatus (Tristar 3000, manufactured by Micromeritics), the pore structure, specific surface area, pore volume, and average pore size of the sample were examined. The sample was measured just after degassing by Vac Prep 061 (manufactured by Micromeritics) at 160 °C for 3 hours. The micropore size distribution of the sample was analyzed by the GCMC method with a nitrogen adsorption apparatus (BELSORP-max, manufactured by BELL Japan).

### [X-ray Diffraction]

Using D8 Advance (manufactured by Bruker AXS), the orderliness in microstructure of the sample was examined. The X-ray was entered at a low angle of 1.0 to 8.0° to the sample for analysis. The slit was 0.1-mm divergence, and a high-speed detector (Lynx Eye) was used for detection.

### (Example A)

### [Synthesis of Monolithic Porous Silica]

As a silica source, 8 g of tetraethoxysilane (TEOS) (0.038 mol; 1 eq) was added in a polypropylene container, and then, 0.2 to 1.2 eq of cationic surfactant (0.038 mol × 0.2 to 0.038 mol × 1.2) was dispersed and stirred. At this time, TEOS was not mixed with the surfactant. That is, a homogeneous mixture was not formed. As cationic surfactants, the following eight kinds were used to form a porous silica: octadecyl trimethylammonium chloride (C18TAC), hexadecyl trimethylammonium chloride (C16TAC), tetradecyl trimethylammonium bromide (C14TAB), dodecyl trimethylammonium bromide (C12TAB), decyl trimethylammonium bromide (C10TAB), octyl trimethylammonium bromide (C8TAB), hexyl trimethylammonium bromide (C6TAB), and butyl trimethylammonium chloride (C4TAC).

Next, the above mixture was added about 2 to 4 eq of water of which pH was adjusted to 0 to 2 with hydrochloric acid (0.038 mol × 2 to 0.038 mol × 4) and stirred at room temperature. During stirring for about 1 hour, the hydrolysis of TEOS proceeded, and an almost homogeneous solution was obtained. This solution (precursor solution) was maintained at room temperature or 60 °C, and continuously stirred or placed. Gelation was completed after 12 hours to several days, and the whole solution was gelated with visually-colorless transparency. The gel was dried at 60 °C and calcined at 600 °C for 3 hours to remove the surfactant. Therefore, a monolithic porous silica with colorless transparency was obtained.

Thus, application of highly-concentrated silicate ion solution as a precursor solution in the reaction system leads to accelerate the synthesis of silica without inhibiting the formation of micelles of the surfactant by solvent molecule or the like. Particularly, it is possible to form a porous silica with fine pores even by a surfactant having a small number of carbon atoms (e.g., 7 or less) which is difficult to synthesize with the conventional method.

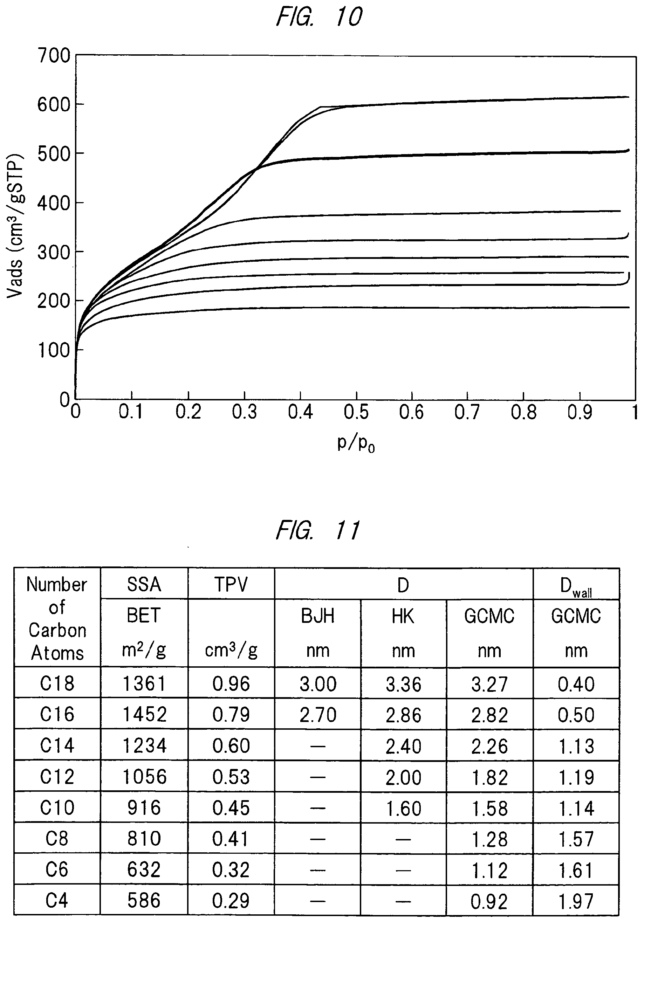

Fig. 10 shows nitrogen adsorption-desorption isotherms of the resultant porous silicas. Fig. 10 shows the nitrogen adsorption-desorption isotherms of the porous silicas using C18TAC, C16TAC, C14TAB, C12TAB, C10TAB, C8TAB, C6TAB, and C4TAC in this order. As shown in Fig. 10, when the number of carbon atoms is around 18 to 14 (C18TAC, C16TAC, and C14TAB), there is a point where the line of the graph is flex and the slope is changed between the low-pressure area and the high-pressure area. This change results from the capillary condensation and corresponds to type IV of the IUPAC classification. This suggests the presence of mesopores. Meanwhile, when the number of carbon atoms is 12 or less (C12TAB, C10TAB, C8TAB, C6TAB, C4TAC), the amount of adsorption suddenly increases in the low-pressure area, however, after then, change of the amount of adsorption was slight. This change corresponds to type I of the IUPAC classification and suggests the presence of micropores.

Fig. 11 shows analysis results of pores of the resultant porous silicas. The table shows specific surface area (SSA), pore volume (TPV), and average pore size (D). The specific surface area (SSA) was measured by the BET adsorption method. The average pore size was measured using the BJH method, the HK method, and the GCMC method. With respect to the average pore size, the HK method can calculate (analyze) the pore size more finely than the BJH method. The GCMC method can calculate (analyze) the pore size more finely than the HK method.

With respect to the porous silica using C18TAC (C18), BET specific surface area was 1361 cm²/g and a pore volume was 0.96 cm³/g. The average pore size was 3.00 nm by the BJH method, 3.36 nm by the HK method, and 3.27 nm by the GCMC method.

With respect to the porous silica using C16TAC (C16), a BET specific surface area was 1452 cm²/g and a pore volume was 0.79 cm³/g. The average pore size was 2.70 nm by the BJH method, 2.86 nm by the HK method, and 2.82 nm by the GCMC method.

With respect to the porous silica using C14TAC (C14), a BET specific surface area was 1234 cm²/g and a pore volume was 0.60 cm³/g. The average pore size was 2.40 nm by the HK method, and 2.26 nm by the GCMC method.

With respect to the porous silica using C12TAC (C12), a BET specific surface area was 1056 cm²/g and a pore volume was 0.53 cm³/g. The average pore size was 2.00 nm by the HK method, and 1.82 nm by the GCMC method.

With respect to the porous silica using C10TAC (C10), a BET specific surface area was 916 cm²/g and a pore volume was 0.45 cm³/g. The average pore size was 1.60 nm by the HK method, and 1.58 nm by the GCMC method.

With respect to the porous silica using C8TAC (C8), a BET specific surface area was 810 cm²/g and a pore volume was 0.41 cm³/g. The average pore size was 1.28 nm by the GCMC method.

With respect to the porous silica using C6TAC (C6), a BET specific surface area was 632 cm²/g and a pore volume was 0.32 cm³/g. The average pore size was 1.12 nm by the GCMC method.

With respect to the porous silica using C4TAC (C4), a BET specific surface area was 586 cm²/g and a pore volume was 0.29 cm³/g. The average pore size was 0.92 nm by the GCMC method.

As shown in Fig. 11, a porous silica with pores proportional to the chain length was obtained. That is, it was found out that the average pore size (D) decreases with decrease in the number of carbon atoms from 18 to 4. Particularly, a porous silica formed using a surfactant having 12 or less carbon atoms has an average pore size of 2 nm or less, and micropores were observed. Additionally, it is possible to synthesize a porous silica using a surfactant having 7 or less carbon atoms, which is difficult to synthesize with the conventional method. The average pore size of a porous silica using C6TAB having 6 carbon atoms was 1.12 nm by the GCMC method, and the average pore size of a porous silica using C4TAB having 4 carbon atoms was 0.92 nm by the GCMC method. Thus, it was found out that it is possible to form a porous silica with supermicropores of which an average pore size is 0.7 nm or more and 1.5 nm or less using a surfactant of which the number of carbon atoms is less than 8. It was also found out that it is possible to form a porous silica with a large pore volume, 0.25 cm³/g or more. Moreover, with decrease in the number of carbon atoms from 18 to 4, the BET specific surface area and the pore volume decrease. With decrease in the number of carbon atoms from 18 to 4, the pore wall thickness (Dwall) increases. The pore wall thickness, i.e., the thickness of a wall forming cylinder, can be calculated from the results of X-ray diffraction or the like. The pore wall thickness (Dwall) can change by the adjustment of the surfactant concentration and the like. For example, the pore volume can increase by reducing the pore wall thickness (Dwall).

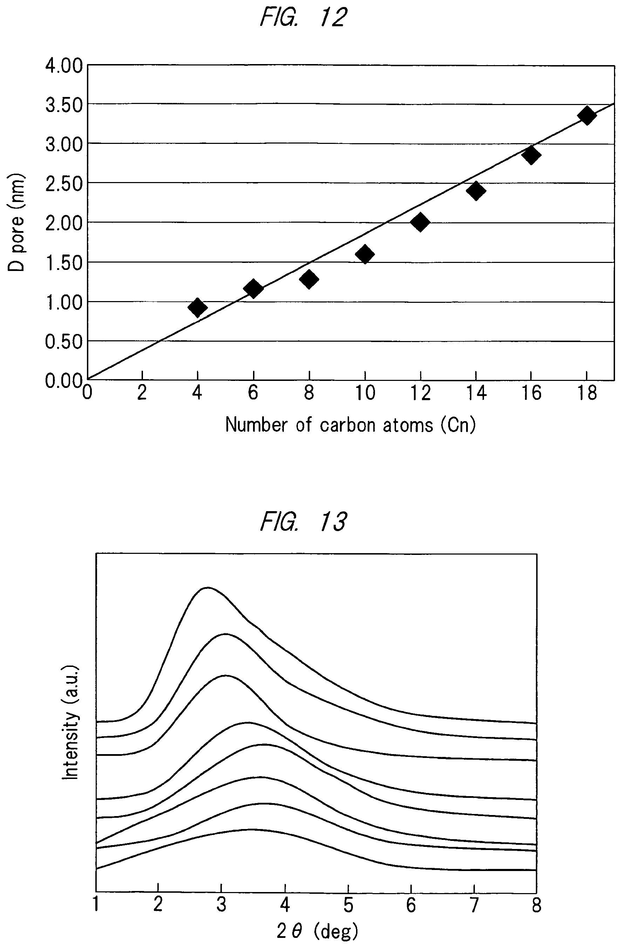

Fig. 12 is a graph showing changes in average pore size (Dpore; nm) to the number of carbon atoms. Accordingly, it can be understood that the average pore size decreases with decrease in the number of carbon atoms from 18 to 4.

Therefore, the pore size can be controlled by calculating the required average pore size depending on the adsorbate (e.g., the molecular diameter, etc.) and selecting the number of carbon atoms of the surfactant suitable for the average pore size. In the above Figs. 11 and 12, the pore size difference is about 0.1 to 0.6 nm, and the pore size can be finely adjusted.

That is, a porous silica is synthesized by examining the correlation between the number of carbon atoms of the hydrophobic moiety of a cationic surfactant and the pore size as shown in Fig. 12, designing the pore size depending on the adsorbate, selecting the number of carbon atoms proportional to the pore size designed from the correlation, and hydrolyzing the alkoxysilane using a cationic surfactant having the selected number of carbon atoms.

Fig. 13 shows a result of the small-angle X-ray diffraction of the resultant porous silica. The vertical axis is intensity (a.u.) and the horizontal axis is 2θ (deg). It shows a result of the small-angle X-ray diffraction of the porous silicas using C18TAC, C16TAC, C14TAB, C12TAB, C10TAB, C8TAB, C6TAB, and C4TAC in this order. Since each shows a broad diffraction pattern, it indicates that the resultant porous silica has a so-called wormhole-shaped (form) structure of which an arrangement of a cylinder (pore) was disordered as opposed to a hexagonal close-packed cylindrical shape.

By removing the alcohol produced during the hydrolysis of alkoxysilane, the order of arrangement can be enhanced. Even if the order of arrangement of pores is low, the adsorption property are excellent, and it can sufficiently elicit the effect as an adsorbent. Therefore, if the priority is the ease of production, the alcohol is not necessarily removed.

In the above Example A, 2 to 4 eq of water was used, however, when 8 eq of water was used, it was observed that the hydrolysis also smoothly progressed. Thus, no solvent (solvent-free) is required for improving formability, that is, water is not contained as a solvent. Water as a solvent refers to, for example, water (solvent) necessary to dissolve or disperse alkoxysilane, a cationic surfactant, and so on and the amount is several tens of equivalents to such a material (e.g., 50 eq or more). On the contrary, a solvent-free of the present example, as the amount of water added to an alkoxysilane,
ranges between 2 eq minimumly required for the reaction and about 10 times the minimum, that is, 2 eq and more to 20 eq or less. More preferably, it ranges between 2 eq or more and 10 eq or less. Using this condition, it is possible to prepare a highly-concentrated mixture of silicate ions and the surfactant in the system and to secure molding property and the stability of surfactant micelles.

### (Embodiment 3)

In this embodiment miniaturization of the pore by adding an organic silane compound is examined.

For example, an alkoxysilane and an organic silane compound are mixed without a solvent, and after mixing a cationic surfactant, water is added as a reaction agent to obtain a precursor solution, thereby gelating the solution.

It is desired that pH of the water added is adjusted to 2, which is an isoelectric point of an alkoxysilane. At the isoelectric point, since rates of hydrolysis of the alkoxysilane and the gelation of silicate ions are the slowest, it is possible to secure sufficient time to form micelle of the surfactant. Though the hydrolysis is accelerated at pH 0 to 1, since the gelation rate of silicate ions is sufficiently low, the similar effect can be achieved. Therefore, it is necessary to adjust the pH of the water added within the range of 0 to 2. Since rates of the hydrolysis and the gelation are too high at pH 3 or higher, it is impossible to secure sufficient time for dissolution of the surfactant and the micelle formation, and thus, a mesoporous silica having the desired pore structure cannot be achieved.

An acid for adjusting pH includes an inorganic such as hydrochloric acid, sulfuric acid and nitric acid, and an organic acid such as acetic acid.

Furthermore, it is required for improving formability that no solvent is present. Accordingly, the amount of water added to the alkoxysilane ranges from 2 eq to 20 eq, more preferably, from 2 eq to 10 eq as well as the above Example 2. Using this condition, it is possible to produce an almost pure mixture of the silicate ions and the surfactant, and to secure the formability and the stability of the surfactant micelle in this system.

The cationic surfactant is represented by the general formula R₁R₂R₃R₄N⁺X⁻, preferably, a quaternary cationic surfactant, wherein R₁ is an alkyl group, a benzyl group, or a phenyl group of 1 to 24 carbon atoms, R₂R₃R₄ are each a methyl group, an ethyl group, a propyl group, or a butyl group, and X is an halogen ion F, Cl, Br, or I. In addition, the alkyl group of R₁ may be linear or branched.

In this embodiment, even when a cationic surfactant having a short carbon chain is used, a porous silica can be efficiently synthesized.

That is, only the amount of water necessary for completing hydrolysis is used, and not used as a solvent. Since water almost disappears from the reaction system after hydrolysis, it is not necessary to concern on declining the ability to form micelles in water. Thus, a porous silica can be synthesized even if a short cationic surfactant having less than 8 carbon atoms is used. Accordingly, since a porous silica with pores having a diameter of 1 nm or less can also be formed, a porous silica with excellent performance for absorbing harmful volatile organic materials (VOC) can be provided.

Furthermore, in this embodiment, since an organic silane compound was added to a mixture of alkoxysilane of a silica source and a cationic surfactant, rod-like micelles are reduced in size, and thus, the pore size (diameter) can be reduced. For example, as an organic silane compound, triethoxyvinylsilane (TEVS) is added to the reaction system in the amount of about 5% to the alkoxysilane (5% eq of the alkoxysilane).

The amount of the organic silane compound added can be adjusted within the range of 1 to 50%. Even if the amount is about 5% as mentioned above, the contraction effect of the pore is great. Since the excess addition of the organic silane compound can lead to an inhibition factor to the formation of micelles, the amount is preferably 20% or less, and more preferably 10% or less. Particularly, in case of a surfactant having a small number of carbon atoms (having less than 8 carbon atoms), it is preferable to reduce the amount of the organic silane compound, more preferably, 10% or less.

The organic silane compound used in this embodiment has a silicon-carbon bond (Si-C) and an alkoxyl group. The compound has a structure in which the alkoxyl group binds to Si and serves as a silica source together with the alkoxysilane. The organic functional group (i.e., the above carbon-containing group) has a relatively short carbon chain such as a vinyl group. In this method, it is considered that the size (diameter) of micelles of a template is reduced by the interaction between TEVS and micelles.

The organic functional group may exist on the pore wall surface and outside particles of the synthesized porous silica, but can be easily removed by subsequent calcination (heat treatment). Of course, if using an organic functional group difficult to volatilize or thermally decompose, the organic functional group may be remained therein. Additionally, by adding the organic functional group itself or another organic compound, it may be performed as a surface modifier. Thus, if it is preferable that the organic functional group be not removed but remained therein, the surfactant may be removed by washing without calcination.

Thus, according to this embodiment, the pores adjusted depending on the number of carbon atoms of the surfactant can be further finely adjusted, and a porous silica having a pore size of about 0.7 to 1.5 nm can be formed. The product can be obtained, for example, in a colorless transparent monolithic (porous) form. In this case, it has sufficient strength against impact and the like.

### [Molding of Porous Silica]

The following is description on molding of a porous silica. For example, by gelating the precursor solution in a reaction container and, placing or stirring, it is possible to mold monolithic mesoporous silica depending on the shape of the reaction container. By selecting the shape of the reaction container, any shape such as pellet, spherical, rod-like, or disk-like can be moleded.

By dropping the precursor solution into a heated liquid or a basic solution, spherical mesoporous silica beads can be produced. In this case, by changing the diameter of a nozzle for dropping, the dropping rate and the viscosity depending on the degree of gelation of the precursor solution, the beads can be molded in any size. Additionally, by containing a bubble therein, hollow beads can be produced. The basic aqueous solution includes an ammonia solution, an sodium hydroxide solution and the like.

By spincoating or dipcoating of the precursor solution, a thin film-formed mesoporous silica can be obtained. The gelation can be completed by directly drying the film or exposing it to ammonia vapor after forming the thin film. Dipcoating is applicable to coating on honeycombs, paper, cloth, and the like, and spincoating and dipcoating are applicable to coating on the surface of a substrate.

By spraying the precursor solution from a nozzle such as a spinner, a fiber-form mesoporous silica can be produced. By spraying the precursor solution from a spinner at a high temperature, it is possible to gelate in the air, or by spraying the precursor solution from a spinner into ammonia vapor, a fiber-form mesoporous silica can be produced.

### [Effects]

From the above descriptions, this embodiment can achieve the following effects.
(1) According to this embodiment, the pore size of a porous silica can be controlled by adding an organic silane as well as the number of carbon atoms of R1. Accordingly, it is possible to perform pore size control depending on the adsorbate. Therefore, the porous silica of this embodiment can be used as an efficient adsorbent for a wide variety of adsorbates. Generally, for gas adsorption in a flow system, it is desired an adsorbent of which a pore size is about 1 to 1.5 times the diameter of adsorbate molecules. However, since the target harmful adsorbate often has a molecular diameter of 1 nm or less, a micropore of 1.5 nm or less to efficiently adsorb the adsorbate is desired. In a conventional method, it has been required to employ a special synthesis method such as use of an expensive surfactant, synthesis at an ultralow temperature and so on to reduce the pore size of a mesoporous silica to the micropore. The mesoporous silica of the present example achieved the reduction of pore size using a widely used surfactant. In addition, it can be also nanoparticulated and the adsorption efficiency can increase. Furthermore, the product can be synthesized in any form and therefore useful. Additionally, both the production and the dry facilities can be greatly downsized due to the solvent-free condition. As a result, the cost for both the raw material and manufacture can be saved. Moreover, since a major factor in preventing the wide spread of conventional mesoporous silicas is in cost and lack of molding properties, the industrial application can be greatly promoted by the improvement of these defects.
(2) The porous silica of this embodiment can be a colorless transparent monolithic form. On the contrary, it is difficult to apply the conventional powder form of several microns to a catalyst support and the like. Thererfore, the porous silica of this embodiment can be used as a catalyst support or the like, for example. Particularly, due to the high transparency and the scattering-unfavorablity, the porous silica is suitable for use as a photocatalyst support. In addition, the superiority is also high because it is easy to mold to various chapes such as films and fibers. Furthermore, the cost for both the raw material and manufacture can be saved when it is used as a catalyst support as well as use as an adsorbent.
(3) In addition, the porous silica of this embodiment covers a broad range of applications and can be used as a functional material such as fluorescent material and electronic material by making various molecules contained in the pores, the porous silica. When the pore size is 1 nm or less, the molecules encapsulated therein (nanospace) express their specific properties. It is believed that the pore size is close to the diameter of the encapsulated molecules, and the molecules are encapsulated in the pore size as a single molecule or as a unit of some quantity. Thus, the porous silica obtained in this embodiment has effects; that the pore size is finely and widely controrable with fine width; easy molding; the high transparency; impact resistance and so on.

The following is description on further detail through examples, but the present invention is limited to the attached claims. Obtained mesoporous silicas were evaluated using the following devices.

### [Observation by Transmission Electron Microscope]

The shape and particle size of a sample were measured using FE-TEM (TECNAI F20: FEI). The observed sample was prepared by dispersing a pulverized sample in a copper mesh with a collodion film.

### [Nitrogen Adsorption]

Using a nitrogen adsorption apparatus (Tristar 3000, manufactured by Micromeritics), the pore structure, specific surface area, pore volume, and average pore size of the sample were examined. The sample was measured just after degassing using Vac Prep 061 (manufactured by Micromeritics) at 160 °C for 3 hours. Using a nitrogen adsorption apparatus (BELSORP-max, manufactured by BELL Japan), the micropore size distribution of the sample was analyzed by the GCMC method.

### [X-Ray Diffraction]

Using D8 Advance (manufactured by Bruker AXS), the orderliness of microstructure of the sample was examined. The X-ray was entered at a low angle of 1.0 to 8.0 degrees to the sample for analysis. The slit was 0.1-mm divergence, and a high-speed detector (Lynx Eye) was used for detection.

### (Example B)

### [Pore Size Control by Adding Organic Silane]

As a silica source, 8 g of tetraethoxysilane (TEOS) (0.038 mol; 1 eq) and 8 g × 5% of triethoxyvinylsilane (TEVS)(0.038 mol × 5%) were mixed in a polypropylene container, then, 0.2 to 1.2 eq of a surfactant was added and stirred. This mixture was added water of which pH was adjusted to 0 to 2 with hydrochloric acid in an amount within a range of 2 to 4 eq, and stirred at room temperature. During stirring for around 1 hour, the hydrolysis of TEOS proceeded, and an almost homogeneous solution was obtained. Furthermore, this solution (precursor solution) was maintained at room temperature or 60 °C, and continuously stirred or placed. Gelation was completed after 12 hours to several days, and the whole solution was gelated with a visually-colorless transparency. The gel was dried at 60 °C and calcined at 600 °C for 3 hours to remove the surfactant. As the surfactant, each of the following three kinds of cationic surfactants were used to form a porous silica: octyl trimethylammonium bromide (C8TAB), hexyl trimethylammonium bromide (C6TAB), and butyl trimethylammonium chloride (C4TAC).

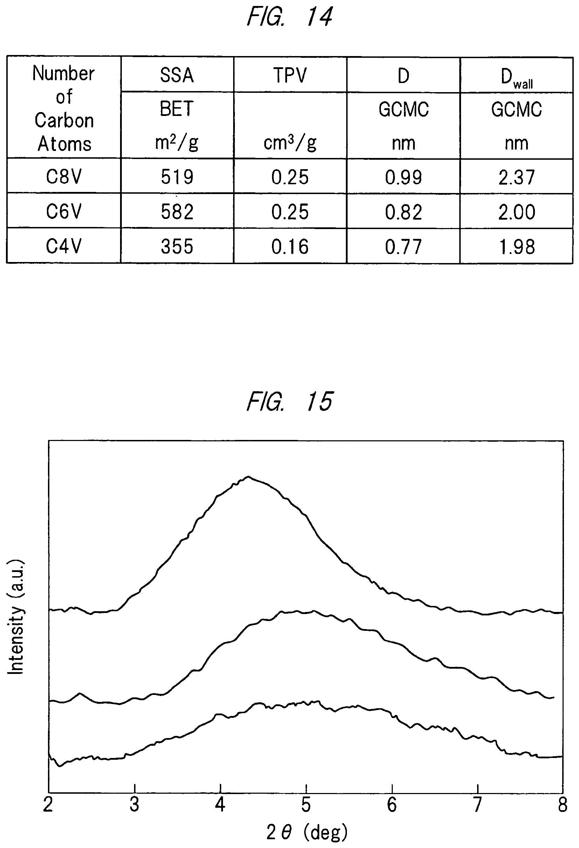

Fig. 14 shows analysis results of pores of the resultant porous silicas. The table shows specific surface area (SSA), pore volume (TPV), average pore size (D), and pore wall thickness (Dwall). The specific surface area (SSA) was measured by BET adsorption method. The average pore size was measured by the GCMC method. The pore wall thickness, i.e., the thickness of a wall forming cylinder, can be calculated from the results of X-ray diffraction or the like.

With respect to the porous silica (C8V) using C8TAB, a BET specific surface area is 519 cm²/g and a pore volume is 0.25 cm³/g. The average pore size was 0.99 nm. The pore wall thickness was 2.37 nm.

With respect to the porous silica (C6V) using C6TAB, a BET specific surface area is 582 cm²/g and a pore volume is 0.25 cm³/g. The average pore size was 0.82 nm. The pore wall thickness was 2.00 nm.

With respect to the porous silica (C4V) using C4TAC, a BET specific surface area is 355 cm²/g and a pore volume is 0.16 cm³/g. The average pore size was 0.77 nm. The pore wall thickness was 1.98 nm.

In contrast, in the above Example A, when C8TAB was used (see Fig. 11), the average pore size is 1.28 nm, it is observed the reduction effect of the average pore size from 1.28 nm to 0.99 nm by adding the organic silane compound. The difference of the pore size is 0.29 nm.

Similarly, compared with the above Example A, when C6TAB was used (see Fig. 11), it is observed the reduction effect of the average pore size from 1.12 nm to 0.82 nm by adding the organic silane compound. The difference of the pore size is 0.30 nm.

When C4TAC was used (see Fig. 11), it is observed the reduction effect of the average pore size from 0.92 nm to 0.77 nm by adding the organic silane compound. The difference of the pore size is 0.15 nm.

Accordingly, it is indicated that the pore size of a porous silica can be finely adjusted by adding the organic silane compound. Particularly, it is indicated that even if a surfactant having 8 carbon atoms is used, it is also possible to form a porous silica with supermicropores having an average pore size of 0.7 nm or more and 1.5 nm or less. From the viewpoint of the above reduction effect, it is likelihood to produce a porous silica with supermicropores having an average pore size of 0.7 nm or more and 1.5 nm or less by adding an organic silane compound even if a surfactant of which carbon atoms is 10 or 12 is used.

Fig. 15 shows a result of the small-angle X-ray diffraction of the resultant porous silicas. The vertical axis is intensity (a.u.) and the horizontal axis is 2θ (deg). It shows a result of the small-angle X-ray diffraction of the porous silicas using C8TAB, C6TAB, and C4TAC, in this order. Since each shows a broad diffraction pattern, it indicates that the resultant porous silica has a so-called wormhole-shaped (form) structure of which an arrangement of a cylinder (pore) was disordered as opposed to a hexagonal close-packed cylindrical shape.

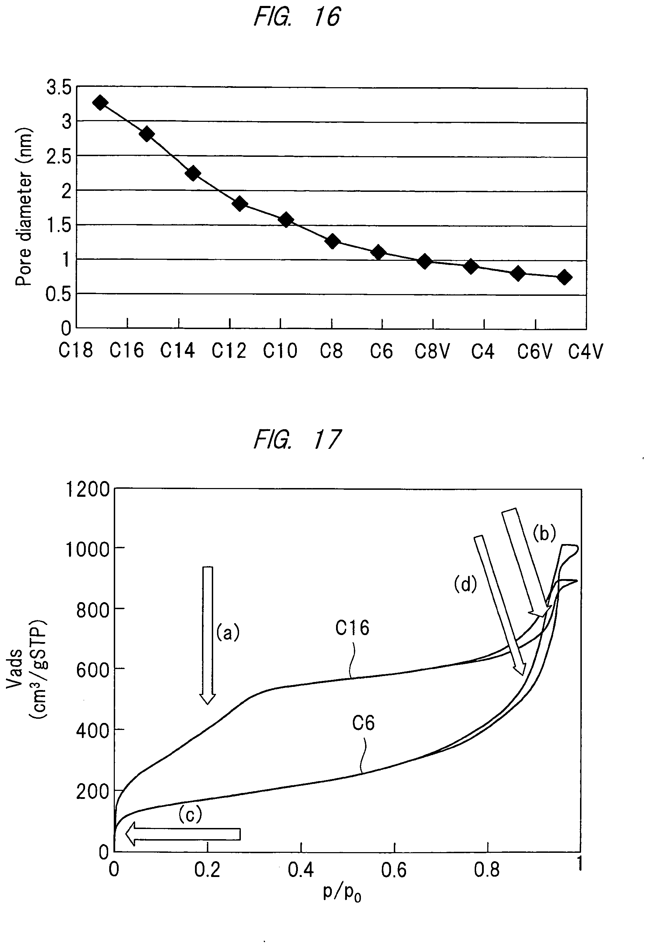

Fig. 16 is a graph showing changes in the average pore size in the porous silica obtained in Examples A and B. The porous silica obtained in Example B is indicated as a character "V" next to Cn showing the number of carbon atoms (n). For example, a porous silica of Example B using C8TAB having 8 carbon atoms is shown as "C8V."

It is understood that the average pore size decreases with decrease in the number of carbon atoms, that C8V C6V, and C4V produced by the adding the organic silane compound are between C6 to C4, and that the pore size can be more finely adjusted.

Basically, the pore size can be finely controlled by calculating the required average pore size depending on the adsorbate (e.g., the molecular diameter, etc.) and then selecting the number of carbon atoms of the surfactant so as to suit the average pore size, or by adding an organic silane compound to form a porous silica. For example, the pore size can be finely controlled in sub-nanometers, in other words, in units of m × 10⁻¹⁰ (m is 1 to 9).

### (Embodiment 4)

In Embodiment 4, a porous silica is nanoparticlated in the same manner as Embodiment 1. That is, a porous silica can be nanoparticlated by adding a water-soluble polymer to the reaction system and contacting with a basic solution (a basic aqueous solution, an alkaline liquid of which pH is 7 or more). The form of the synthesized porous silica was analyzed in more detail, and deeply examined.

An inexpensive and widely used polymer such as polyethylene glycol (PEG) can be used as the water-soluble polymer. The average molecular weight of polyethylene glycol is not limited, but preferably several hundreds to several thousands. The water-soluble polymer includes polyethylene oxide or the like in addition to the above PEG.

A water-soluble polymer such as PEG is also soluble in silicate ions, thererby producing homogeneous solution.

In this embodiment, porous silica particles of which a particle size (diameter) is 10 to 20 nm can be produced. In this embodiment, the product can be obtained as an aggregate of which each nanoparticle (grain) binds each other. The nanoparticle itself forms an aggregate, however functions as new mesopores since pores of the interparticle space are connected to one another. The average size of the pores of the interparticle space is around 50 nm, for example. The aggregate of nanoparticles is obtained as a white monolithic form (in the form of a continuous mass) and has sufficient strength against impact.

### (Example C)

### [Synthesis of Porous Silica Nanoparticles]

As a silica source, 8 g of TEOS (0.038 mol; 1 eq) was placed in a polypropylene container, and after adding 0.2 to 1.2 eq of a surfactant, 7.5 g of PEG of which an average molecular weight is 1000 was added and stirred. This mixture was added water of which pH was adjusted to 0 to 2 with hydrochloric acid in an amount within a range of 2 to 4 eq and stirred at room temperature. During stirring for 1 hour, the hydrolysis of TEOS proceeded, and an almost homogeneous solution of the surfactant and the polyethylene glycol was obtained. This solution (precursor solution) was maintained at room temperature or 60 °C, and stirred or placed. Gelation was completed after 12 hours to several days, and the whole solution was gelated with a visually-colorless transparency. The gel was dried at 60 °C and calcined at 600 °C for 3 hours to remove the surfactant and polyethylene glycol.

The cationic surfactant includes octadecyl trimethylammonium chloride (C18TAC), hexadecyl trimethylammonium chloride (C16TAC), tetradecyl trimethylammonium bromide (C14TAB), dodecyl trimethylammonium bromide (C12TAB), decyl trimethylammonium bromide (C10TAB), octyl trimethylammonium bromide (C8TAB), hexyl trimethylammonium bromide (C6TAB), and butyl trimethylammonium chloride (C4TAC).

Under the condition that only gelation and calcination are performed such as the above step, a monolithic porous silica consisting of an aggregate of nanoparticles is obtained by using a surfactant having 16 or more carbon atoms while only an amorphous porous silica was obtained by using a surfactant having less than 16 carbon atoms or a bromide salt.

Then, among the above precursor solutions, a precursor solution of C6TAB was dropped to a basic aqueous solution. As the basic aqueous solution, a 28% ammonia solution was used. The pH was about 13. The generally granular precursor solution dropped was gelated and precipitated in the ammonia solution. The obtained gel was dried at 60 °C and calcined at 600 °C for 3 hours to remove the surfactant and polyethylene glycol. The resultant porous silica was in the form of colorlessness beads. The beads correspond to a shape dropped to the precursor solution.

The basic aqueous solution includes an aqueous solution of amines as well as the above ammonia solution, for example. These bases are suitable for a basic solution because it can be easily removed during the drying or calcination process. Since the dissolution of a silica starts at a high-pH region of pH 14 or more, and a basic solution of which pH is high, it is preferable that a silica be quickly removed from the solution after the reaction (gelation or polymerization). Furthermore, since the silica dissolution rate enhance by alkali metal ions or alkaline earth metal ions coexisting in the reaction system, it is more preferable to use a basic aqueous solution of the above ammonia or amines than a solution of sodium hydroxide or the like,.

Fig. 17 shows nitrogen adsorption desorption isotherms of both porous silica nanoparticles synthesized using C16TAC and C6TAB. The porous silica nanoparticles (C16) synthesized using C16TAC was merely gelated and calcinated, and the porous silica nanoparticles (C6) synthesized using C6TAB was gelated in the basic solution.

In a graph of C16, the line is flex and the slope changes in the part (a). As mentioned above, this part (a) corresponds to the type IV of the IUPAC classification and is suggested the presence of mesopores. Furthermore, in the part (b), the line of the graph is also flex and a hysteresis slope is observed. This part (b) also corresponds to the above type IV and suggests the presence of larger mesopores.

A sudden increase of the amount of adsorption is observed in the part (c) of C6. As mentioned above, this part (c) corresponds to the type I of the IUPAC classification and suggests the presence of micropores. Furthermore, the line of the graph of C6 is flex and a hysteresis slope is observed at the part (d). This part (d) corresponds to the above type IV and suggests the presence of mesopores.

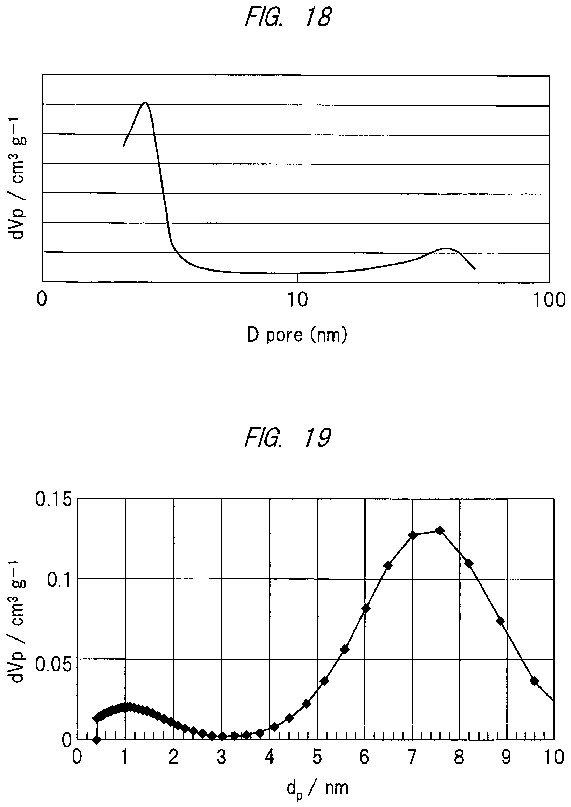

Fig. 18 is a graph showing the pore size distribution of the porous silica nanoparticles synthesized using C16TAC. The average pore size was measured by the BJH method. As seen in the graph, two pore sizes were observed in the porous silica. That is, two pores of a mesopore derived from about 2 nm of the surfactant and a mesopore corresponding to the about 20 to 50 nm of interparticle space.

Fig. 19 is a graph showing the pore size distribution of the porous silica synthesized using C6TAB. The average pore size was measured by the GCMC method. As seen in the graph, two pore sizes were observed in the porous silica nanoparticles. That is, two pores of a micropore derived from about 1 nm of the surfactant and a mesopore corresponding to about 5 to 10 nm of the interparticle space.

As elaborated above, under the condition that only gelation and calcination are performed such as the above step, a monolithic porous silica consisting of an aggregate of nanoparticles is obtained by using a surfactant having 16 or more carbon atoms while only an amorphous porous silica was obtained by using a surfactant having less than 16 carbon atoms or a bromide salt. On the other hand, when the precursor solution is contacted with a basic solution, it is possible to nanoparticulate even by using a surfactant having less than 16 carbon atoms.

The above phenomenon can be considered as below. In a precursor solution of pH 0 to 2, silicate ion is neutrally or positively charged. Therefore, a silicate ion interacts to polyethylene glycol with the hydrogen bond and electrostatically interacts to the surfactant via a counteranion. In the case of a surfactant with a short carbon chain i.e., with a small number of carbon atoms, since the micelle-forming ability is low, it cannot be sufficiently carried out the aggregation of surfactant resulting from the polymerization of silica and the resulting phase separation of polyethylene glycol outward from the system. Therefore, only an amorphous silica is obtained. On the other hand, when the pH of the system is suddenly increased by dropping a basic aqueous solution, the silicate ion is negatively charged, and then, this leads to a stronger electrostatic interaction with the cationic surfactant without counteranions. The hydrogen bond with polyethylene glycol is disappeared, and conversely, phase separation is induced by electrostatic repulsion. It is believed that these two phenomena induce the formation of micelles of the surfactant and the phase separation of polyethylene glycol, and a porous silica with pores corresponding to the chain length of the surfactant can be nanoparticulated.

### (Embodiment 5)

Embodiment 5 examines the adsorption performance of the porous silicas synthesized in Examples A and B. Toluene was used as the adsorbate.

### (Example D)

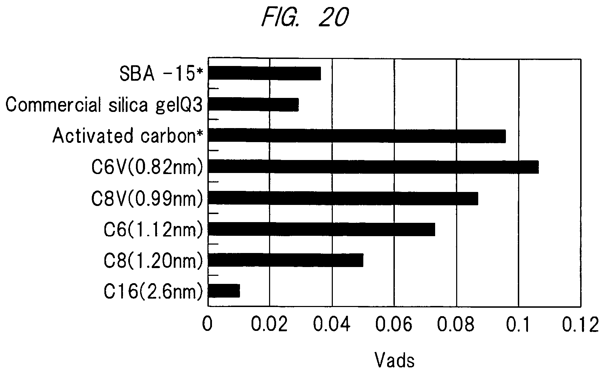

The dynamic toluene adsorption capacity of the porous silicas (samples) synthesized in Examples A and B was measured. Measurement was performed using a dynamic adsorption evaluation apparatus (manufactured by Okura Giken) under the following conditions: toluene concentration: 100 ppm, air velocity: 1 m/sec, air volume: 10.6 L/min, sample amount: 6.4 mL, sample tube inner diameter: 15 mm. Each sample was pretreated under dry air flow at 200 °C for about 1 hour. Fig. 20 shows the amount of dynamic toluene adsorption per gram of sample (Vads), as well as the amount of dynamic adsorption of a commercially available activated carbon described in Non-patent literature 5 and of a fiber-form mesoporous silica (SBA-15 fiber). The amount of dynamic adsorption of the commercially available silica gel Q3 was also measured in the same manner.

It was indicated that the amount of adsorption of the porous silicas synthesized using C16TAC (C16), C8TAC (C8), and C6TAC (C6) studied in Example A increases with decrease in the number of carbon atoms.

It was indicated that the amount of adsorption of the porous silica synthesized with C8TAC by adding an organic silane (C8V) and the porous silica synthesized with C6TAC (C6V) studied in Example B increases more than the above C16, C8, and C6, and the adsorption performance is equal to the activated carbon.

The value in parentheses in the figure shows an average pore size. Accordingly, it was understood that the toluene adsorption performance increases with decrease in pore size. However, this adsorption performance varies by the consistency of between the adsorbate size and the pore size, and the adsorption performance does not always increase with decrease in pore size for any material. Therefore, as elaborated above, the adsorption performance can be improved by designing a porous silica with pores depending on the adsorbate.

Since the main component of the porous silica of the present invention is SiO₂, the risk of ignition occurring in the activated carbon is less. Particularly, though the risk of ignition increases by adsorbing an organic solvent, the porous silica of the present invention can reduce such risk. Therefore, it is suitable for an adsorbent. In addition, the desorption property of the porous silica of the present invention is superior to the activated carbon as an adsorbate. Therefore, the porous silica can be reused as an adsorbent after desorbing the adsorbate for example, by heat treatment, solvent treatment, or the like. Further, using such desorption property, the adsorbate can also be easily recovered and reused.

### INDUSTRIAL APPLICABILITY

The present invention can be effectively applicable, for example, for a mesoporous silica having a pore diameter less than 2 nm, which is obtained under solvent-free condition by using a cationic surfactant having a hydrophobic moiety of 2 to 7 carbon atoms as a template; mesoporous silica nanoparticles obtained by adding a water-soluble polymer or by excessive addition of a surfactant; a monolithic, a beads-shaped, a thin film-formed, or a fiber-form mesoporous silica obtained by forming a precursor solution of the mesoporous silica; and a method of producing thereof.

## Claims

1. A method for producing a porous silica by hydrolyzing an alkoxysilane, comprising the following steps:
(A) generating a mixture by mixing a cationic surfactant and the alkoxysilane without a solvent; and,
(B) hydrolyzing the alkoxysilane by adding water to the mixture, wherein the porous silica is formed with a template of a micelle of the cationic surfactant by a hydrolyzation reaction under the condition in which, when the stoichiometric ratio of the alkoxysilane; the water is 1; n, the alkoxysilane is hydrolyzed under the condition that n is 2 to 4 and pH of the water is 0 to 2, and
wherein an average pore size of the porous silica is not less than 0.5 nm and not more than 1.4 nm.

2. The method according to claim 1, wherein the number of carbons of a hydrophobic moiety of the cationic surfactant is 2 to 7.

3. The method according to claim 1 or 2, wherein the step (A) is a step of mixing the cationic surfactant, the alkoxysilane, and an organic silane to form a mixture.

4. The method according to claim 1 or 2, wherein the step (A) is a step of mixing the cationic surfactant, the alkoxysilane, and a water-soluble polymer.

5. The method according to claim 4, wherein a mixture comprising the surfactant, the alkoxysilane, the water, and the water-soluble polymer is exposed to a basic aqueous solution.

6. The method according to claim 5, wherein the basic aqueous solution is an aqueous ammonia solution.

7. The method according to claim 4, wherein the water-soluble polymer is polyethylene glycol or polyethylene oxide.

## Patentansprüche

1. Verfahren zur Herstellung einer porösen Kieselsäure durch Hydrolyse eines Alkoxysilans, umfassend die folgenden Schritte:
(A) Erzeugen einer Mischung durch Mischen eines kationischen Tensids und des Alkoxysilans ohne Lösungsmittel; und
(B) Hydrolysieren des Alkoxysilans durch Hinzufügen von Wasser zur Mischung, wobei die poröse Kieselsäure mit mit einem Templat einer Mizelle des kationischen Tensids durch eine Hydrolysereaktion unter der Bedingung gebildet wird, dass, wenn das stöchiometrische Verhältnis des Alkoxysilans: das Wasser 1:n ist, das Alkoxysilan unter der Bedingung hydrolysiert wird, dass n 2 bis 4 und der pH-Wert des Wassers 0 bis 2 ist, und
wobei eine durchschnittliche Porengröße der porösen Kieselsäure nicht weniger als 0,5 nm und nicht mehr als 1,4 nm beträgt.

2. Verfahren nach Anspruch 1, wobei die Anzahl der Kohlenstoffe eines hydrophoben Teils des kationischen Tensids 2 bis 7 beträgt.

3. Verfahren nach Anspruch 1 oder 2, wobei der Schritt (A) ein Schritt des Mischens des kationischen Tensids, des Alkoxysilans und eines organischen Silans zur Bildung einer Mischung ist.

4. Verfahren nach Anspruch 1 oder 2, wobei der Schritt (A) ein Schritt des Mischens des kationischen Tensids, des Alkoxysilans und eines wasserlöslichen Polymers ist.

5. Verfahren nach Anspruch 4, wobei eine Mischung umfassend das Tensid, das Alkoxysilan, das Wasser und das wasserlösliche Polymer einer wässrigen Basislösung ausgesetzt wird.

6. Verfahren nach Anspruch 5, wobei die wässrige Basislösung eine wässrige Ammoniaklösung ist.

7. Verfahren nach Anspruch 4, wobei das wasserlösliche Polymer Polyethylenglykol oder Polyethylenoxid ist.

## Revendications

1. Procédé de production d'une silice poreuse par hydrolyse d'un alcoxysilane, comprenant les étapes suivantes :
(A) génération d'un mélange en mélangeant un tensioactif cationique et l'alcoxysilane sans solvant ; et,
(B) hydrolyse de l'alcoxysilane en ajoutant de l'eau au mélange, dans lequel la silice poreuse est formée avec un modèle d'une micelle du tensioactif cationique par une réaction d'hydrolyse sous une condition où, lorsque le rapport stœchiométrique alcoxysilane: eau est de 1:n, l'alcoxysilane est hydrolysé à condition que n soit de 2 à 4 et que le pH de l'eau soit de 0 à 2, et
dans lequel une taille de pore moyenne de la silice poreuse n'est pas inférieure à 0,5 nm et pas supérieure à 1,4 nm.

2. Procédé selon la revendication 1, dans lequel le nombre de carbones d'une fraction hydrophobe du tensioactif cationique est de 2 à 7.

3. Procédé selon la revendication 1 ou 2, dans lequel l'étape (A) est une étape de mélange du tensioactif cationique, de l'alcoxysilane et d'un silane organique pour former un mélange.

4. Procédé selon la revendication 1 ou 2, dans lequel l'étape (A) est une étape de mélange du tensioactif cationique, de l'alcoxysilane et d'un polymère soluble dans l'eau.

5. Procédé selon la revendication 4, dans lequel un mélange comprenant le tensioactif, l'alcoxysilane, l'eau et le polymère soluble dans l'eau est exposé à une solution aqueuse basique.

6. Procédé selon la revendication 5, dans lequel la solution aqueuse basique est une solution aqueuse d'ammoniac.

7. Procédé selon la revendication 4, dans lequel le polymère soluble dans l'eau est du polyéthylène glycol ou de l'oxyde de polyéthylène.
